Europäisches Patentamt

(19) European Patent Office

Office européen des brevets

(11) Veröffentlichungsnummer: **0 330 114 B1**

(12) **EUROPÄISCHE PATENTSCHRIFT**

(45) Veröffentlichungstag der Patentschrift:
23.10.91 Patentblatt 91/43

(51) Int. Cl.$^5$: **F16B 13/14, E04B 1/48**

(21) Anmeldenummer: **89102887.0**

(22) Anmeldetag: **20.02.89**

(54) **In ein vorgebohrtes Loch einer mehrschaligen Gebaüdewand einzusetzender Injektionsanker.**

(30) Priorität: **23.02.88 DE 3805538**

(43) Veröffentlichungstag der Anmeldung:
**30.08.89 Patentblatt 89/35**

(45) Bekanntmachung des Hinweises auf die
Patenterteilung:
**23.10.91 Patentblatt 91/43**

(84) Benannte Vertragsstaaten:
**AT BE CH DE ES FR GB GR IT LI LU NL SE**

(56) Entgegenhaltungen:
**DE-A- 2 315 859**
**DE-A- 2 755 831**
**DE-A- 3 304 071**
**DE-A- 3 608 775**

(73) Patentinhaber: **INTERNATIONAL INTEC
PATENT HOLDING ESTABLISHMENT
Josef Rheinbergerstrasse 6
FL-9490 Vaduz (LI)**

(72) Erfinder: **Harke, Alfons
Bleregemstraat 27
B-1790 Hekelgem (BE)**

(74) Vertreter: **Peerbooms, Rudolf, Dipl.Phys.
Dickmannstrasse 45c
W-5600 Wuppertal-Barmen (DE)**

## Beschreibung

Die Erfindung betrifft einen in ein vorgebohrtes Loch einer mehrschaligen Gebäudewand einzusetzenden Injektionsanker, mit mindestens einem Injektionsrohr und mit einem Stahlanker, der an einem vorderen und an einem hinteren Verankerungsabschnitt gesonderte, zum Abschluß der Bohrlochhälften innerhalb jeder Gebäudeschale dienende Dichtelemente aufweist, welche zur Ausbildung von Injektionmasse-Pfropfen ausgelegt sind, wobei der Injektionsanker auf einem zwischen den Verankerungsabschitten liegenden Mittelbereich zur Übertragung der zwischen den beiden Gebäudeschalen auftretenden Zugkräfte ausgelegt ist.

Durch die DE-A-3608775 ist ein sehr preiswert herstellbarer Injektionsanker bekannt, der aus einem wellenförmig über seine Länge hinweg eingedrückten Injektionsrohr und einem das Injektionsrohr über seine gesamte Länge umschließenden Strumpf besteht, der mit seinen Enden jeweils in die rundbelassenen Enden des Injektionsrohres eingestülpt und mittels nietartiger Befestigungsmittel festgeklemmt ist. Mit diesem bekannten Injektionsanker können zwar die Schalen einer mehrschaligen Wand miteinander verankert werden, jedoch ist der bekannte Injektionsanker nur bedingt bei Gebäudeaußenwänden einsetzbar, bei denen die Witterungseinflüsse, speziell eindringendes Wasser und Temperaturdifferenzen zwischen der äußeren und inneren Wandschale, zu berücksichtigen sind. Bei dem bekannten Injektionsanker erstreckt sich der Strumpf auch über die Luftschicht zwischen den Gebäudeschalen hinweg und kann somit Feuchtigkeit von dem äußeren Verblendmauerwerk zur tragenden inneren Wandschale leiten. Zudem wird dort das Injektionsrohr auch im Bereich der Luftschicht in dem Injektionsmasse-Pfropfen eingebettet und dadurch so starr, daß thermisch bedingten Relativbewegungen zwischen der sonnenbestrahlten Außenschale und der Innenschale von dem Injektionsanker nicht gefolgt werden kann.

Ein Injektionsanker, der die Merkmale des Oberbegriffes von Anspruch 1 aufweist, ist durch die DE-A-2315859 bekannt. Dieser Injektionsanker besitzt einen massiven bolzenförmigen Stahlanker, der zum Tragen vorgehängter Fassaden bemessen ist und dementsprechend nicht merklich biegbar sein darf. Bei einem Einsatz dieses Injektionsankers bei mehrschaligen Gebäudewänden besteht eine große Gefahr, daß aufgrund der thermischen Spannungen in der äußeren oder auch in der inneren Mauerwerkschale Risse oder Abplatzungen auftreten.

Der Erfindung liegt die Aufgabe zugrunde, einen als Luftschichtanker einsetzbaren Injektionsanker zu schaffen, der insbesondere für einen nachträglichen Einbau im Rahmen von Sanierungsmaßnahmen geeignet sein soll.

Ausgehend von einem Injektionsanker der eingangs genannten Art, wird die Lösung dieser Aufgabe erfindungsgemäß dadurch erreicht, daß die Injektionsmasse-Pfropfen derart ausgelegt sind, daß deren Durchmesser mindestens das 2 1/2 -fache des Durchmessers des Stahlankers und deren Abstand voneinander ein Vielfaches des Stahlankerdurchmessers beträgt, und daß der Mittelbereich des Stahlankers in einem solchen Maße elastisch biegbar ist, daß der Injektionsanker thermisch bedingten seitlichen Bewegungen zwischen den beiden Gebäudeschalen folgen kann. Vorzugsweise ist dabei vorgesehen, daß die Dichtelemente jeweils einen, die auszubildenden Injektionsmasse-Pfropfen umschließenden Strumpf umfassen.

Der Injektionsanker nach der Erfindung kann beispielsweise für Pfropfen von fünf oder mehr Zentimetern Durchmesser ausgelegt werden, wobei der Stahlanker zugleich das Injektionsrohr bildet, welcher einen Durchmesser zwischen fünf bis fünfzehn Millimetern und eine geringe Wandstärke von etwa einem Millimeter aufweist. Nach dem Einpressen der Injektionsmasse besteht der Anker dann aus zwei dicken Pfropfen, die aufgrund einer gewissen Kleber- oder Mörteldurchlässigkeit der Strümpfe großflächig in die äußere und in die innere Wandschale eingebunden sind und die ihrerseits über das verhältnismäßig dünne Stahlanker-Injektionsrohr aneinander gefesselt sind. Die von dem Stahlanker-Injektionsrohr gebildete, verhältnismäßig dünne Brücke reicht aus, um erhebliche Zugkräfte aufzufangen, so daß die Zugankerfunktion einwandfrei erfüllt wird, andererseits aber auch eine gewisse Biegsamkeit gegeben ist, so daß der Injektionsanker insgesamt den thermisch bedingten seitlichen Bewegungen zwischen den beiden Gebäudeschalen folgen kann.

In Ausgestaltung der Erfindung kann vorgesehen werden, daß der Stahlanker nur an seinen Verankerungsabschnitten mit Querschnittsverformungen in Form von Eindrückungen versehen und auf dem Mittelabschnitt rund belassen ist.

Dadurch wird einerseits eine wirksame Verankerung zwischen Pfropfen und Stahlanker sichergestellt und andererseits aber dafür gesorgt, daß der Stahlanker in seinem Mittelabschnitt nach allen Seiten hin in gleichem Maße biegeelastisch ist.

Gemäß einer speziellen Ausgestaltung der Erfindung kann ferner vorgesehen werden, daß die Strumpfbefestigungsmittel jeweils aus Scheiben mit angeformtem Konusring bestehen, auf dem jeweils ein umgestülptes Strumpfende mittels eines Klemmringes befestigt ist, der eine konische Innenöffnung besitzt und mit seinem größeren, scharfkantigen Innenrand dem dickeren Ende des Konusringes zugewandt ist. Hierdurch wird ein äußerst zuverlässiger Sitz der Strumpfenden an den Scheiben erreicht.

Ferner können der Erfindung zufolge die beiden dem Mittelabschnitt benachbarten Scheiben zwei teleskopartig ineinandergreifende Überlaufröhrchen zur Verbindung der beiden Strumpfräume aufweisen und können diese Scheiben zur Anpassung an die Lage und die Abmessung der Luftschicht der Gebäudewand auf dem Stahlanker-Injektionsrohr bei angeklemmten Strümpfen verschiebbar sein. Sind die Lage und Abmessung der Luftschicht bei einem bestimmten Bauobjekt bekannt und konstant, kann die Positionierung der beiden mittleren Scheiben auf dem Injektionsrohr bereits im Herstellwerk erfolgen. Bei Sanierungsarbeiten zeigt sich allerdings sehr oft, daß die Breite der Luftschicht innerhalb einer Gebäudewand stark schwankt. In einem solchen Falle werden dann erst vor Ort die beiden mittleren Scheiben entsprechend positioniert. Mittels eines Klebers oder eines auf die Teleskopröhrchenenden aufgetragenen Tropfen Acetons kann der Abstand zwischen den beiden mittleren Scheiben rasch fixiert werden.

Gemäß einer bevorzugten Ausführungsform des Injektionsankers kann der Erfindung zufolge vorgesehen werden, daß er mit zwei Injektionseinleitungen versehen ist, von denen eine im Bereich des hinteren Strumpfes und die andere im Bereich des vorderen Strumpfes mündet, so daß zunächst nur der hintere Pfropfen ausgebildet und nach Aushärten auf seine Zugfestigkeit prüfbar ist, ehe der vordere Pfropfen ausgebildet wird. Die ordnungsgemäße Ausbildung des hinteren Pfropfens ist von größter Bedeutung für den Erfolg beispielsweise von Sanierungsarbeiten, da es von der Verankerung in der hinteren Schale abhängt, welcher Belastung der Anker im Bereich der vorderen Gebäudeschale ausgesetzt werden darf.

Um die Ausbildung des hinteren Pfropfens besser überwachen zu können, kann erfindungsgemäß der Injektionsanker mit einem nur im Innenraum des hinteren Strumpfes offenen Rücklaufrohr versehen sein, das an seinem vorderen, vor der vorderen Abdeckscheibe des vorderen Strumpfes liegenden Ende einen Auffangstrumpf zur Sichtkontrolle für die Ausbildung des hinteren Pfropfens trägt. Der vordere Auffangstrumpf füllt sich erst mit Injektionsmasse, wenn diese im Innenraum des hinteren Strumpfes bereits einen erheblichen Druck erreicht hat, und an dem Aufblähen des vorderen Auffangstrumpfes kann durch optische Beobachtung auf die Druck- und Füllverhältnisse im hinteren Strumpf geschlossen werden. Nach dem Aushärten wird der vordere, ebenfalls ausgehärtete Auffangstrumpf abgetrennt, und er kann aufbewahrt werden, um jederzeit später einmal Aufschluß geben zu können, welches Material für den hinteren Pfropfen verwendet worden ist und wie dessen Aushärtungsgrad und sonstige Eigenschaften waren.

Bei den bisher beschriebenen Ausführungsformen bestand der Stahlanker aus einem Rohr und bildete also selbst schon das bzw. eines der Injektionsrohre.

Zur Erzielung eines in seinem Mittelbereich zwischen den beiden Gebäudeschalen ausbiegbaren, vielen Lastwechseln standhaltenden Injektionsankers ist der Erfindung zufolge bevorzugt vorgesehen, daß der Stahlanker aus einem massiven Drahtstück besteht. Dabei kann der Stahlanker einen Durchmesser von etwa drei bis fünf Millimetern aufweisen. Sein freier Mittelbereich ist durch einen festen Abstand zwischen den beiden inneren Scheiben auf Einhaltung eines Mindestabstandes gesichert, der bei den angegebenen Drahtstärken in einem Bereich von fünf bis acht Zentimetern liegen sollte. Bei der Verwendung als Luftschichtanker in einer beispielsweise sonnenbeschienenen Wand unterliegt der Anker während eines Jahrzehnts bis zu 30.000 Lastwechseln, denen der Anker nur dann zerstörungsfrei folgen kann, wenn seine freie, ausbiegbare Länge das Vielfache seiner Durchmessers beträgt. Massive Stahlanker sind unter dem Gesichtspunkt der Wechselbelastbarkeit rohrförmigen Ankern im allgemeinen weit überlegen.

Weitere besondere Ausführungsarten der Erfindung sind in den abhängigen Ansprüchen angegeben.

Die Erfindung wird im folgenden anhand mehrerer in der Zeichnung dargestellter Ausführungsbeispiele näher beschrieben. In der Zeichnung zeigen :

Fig. 1     einen Längsschnitt durch einen Injektionsanker in fertig montiertem Zustand,

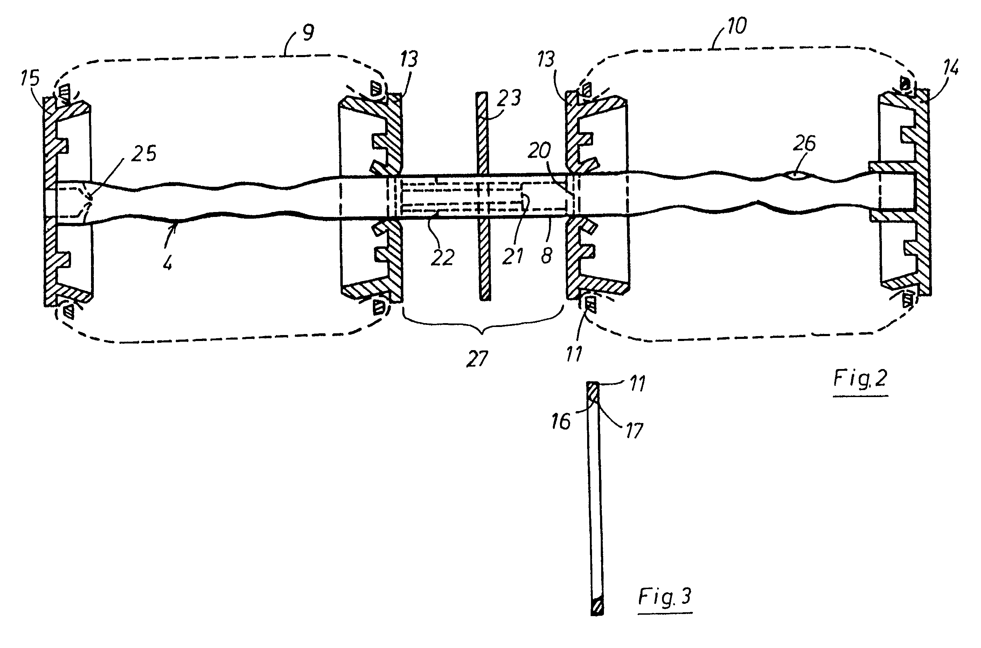

Fig. 2     einen Schnitt gemäß der Linie II-II in Fig. 1,
Fig. 3     in einem Diametralschnitt einen zur Strumpfbefestigung verwendeten Klemmring,
Fig. 4     ein zweites Ausführungsbeispiel eines Injektionsankers nach der Erfindung,
Fig. 5     einen drahtförmigen Stahlanker,
Fig. 6     ein drittes Ausführungsbeispiel,
Fig. 7     ein viertes Ausführungsbeispiel des Injektionsankers,
Fig. 8     eine Stirnansicht auf die frontseitige Scheibe des Injektionsankers nach Fig. 8 und
Fig. 9     ein fünftes Ausführungsbeispiel.

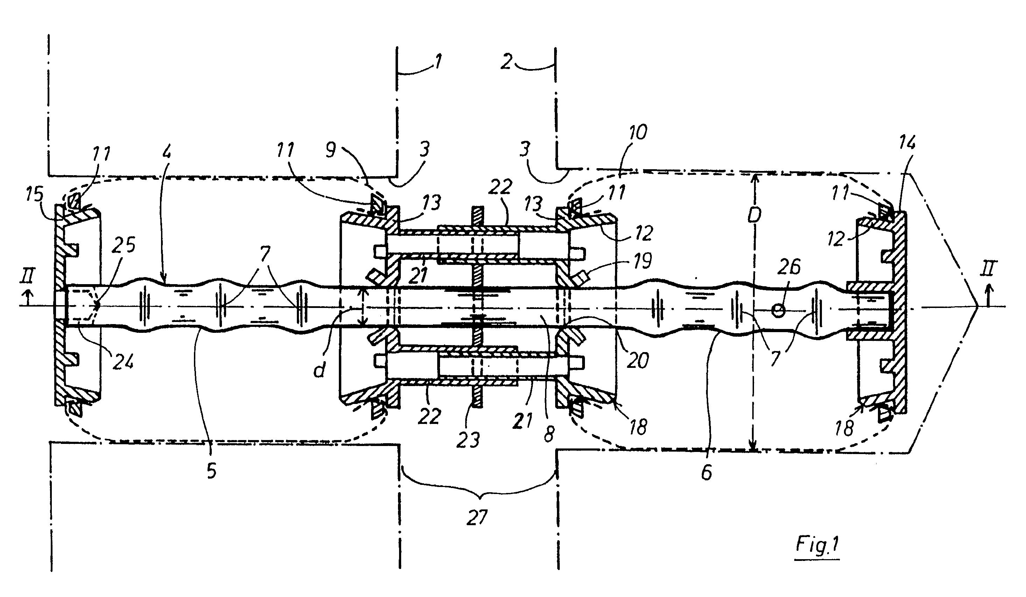

In Fig. 1 ist in strichpunktierten Linien eine mehrschalige Gebäudewand aus äußerem Verblendmauerwerk 1 und innerer Wandschale 2 gezeigt, in denen ein etwa armdickes Bohrloch 3 ausgebildet ist. Das Bohrloch 3 ist beispielsweise im Rahmen einer Bausanierung beim Ausschneiden eines verrotteten Luftschichtankers mittels eines Pfropfenschneider-Bohrers angefallen.

Der eingesetzte Injektionsanker besitzt ein zentrales Stahl-Injektionsrohr 4, das an seinen den Gebäudeschalen 1 und 2 zugeordneten Verankerungsabschnitten 5 und 6 jeweils mit Querschnittsverformungen in Form von Eindrückungen 7 versehen ist. An seinen Enden und auf einem Mittelabschnitt 8 ist das Injektionsrohr 4 rund belassen.

Das Injektionsrohr 4 trägt an seinem vorderen und an seinem hinteren Verankerungabschnitt 5, 6 gesonderte Dichtelemente zum Abschluß der Bohrlochhälften in jeder Gebäudeschale. Diese Dichtelemente umfassen jeweils einen gesonderten Strumpf 9, 10, deren umgestülpte Enden jeweils mittels eines Klemmringes 11 auf Konusringen 12 festgeklemmt sind. Die Konusringe 12 sind an Scheiben 13, 14, 15 nahe jeweils ihres äußeren Randes angeformt und weisen jeweils mit ihrem dickeren Ende zum Strumpfinnenraum hin. Die Klemmringe 11 weisen eine konische Innenöffnung 16 auf und sind mit ihrem kleineren, scharfkantigen Innenrand 17 jeweils dem dickeren Ende des Konusringes 12 zugewandt, so daß die Klemmringe 11 bei einer Aufblähung der Strümpfe in Richtung auf das dickere Konusende hin gezogen werden und das eingestülpte Strumpfende dementsprechend in verstärktem Maß einklemmen. Zur Erleichterung des Aufsetzens der Klemmringe sind die Konusringe an ihrer Außenkante mit einer Abfasung 18 versehen. Die dem Mittelabschnitt 8 des Injektionsrohres 4 benachbarten Scheiben 13, 13 weisen jeweils eine zum jeweiligen Strumpfraum hin gerichtete Nabenbuchse 19 mit angeformter, elastischer Dichtlippe 20 auf. Die elastischen Dichtlippen erlauben ein Aufschieben der Scheiben 13 über die im Querschnitt verformten Verankerungsabschnitte 5, 6 hinweg und gewähren trotzdem eine einwandfreie Abdichtung in ihrer gezeigten Arbeitsposition.

Die beiden Scheiben 13 weisen jeweils zwei teleskopartig ineinandergreifende Überlaufröhrchen 21, 22 zur Verbindung der beiden Strumpfräume auf. Jede Scheibe besitzt hierbei ein dünneres Röhrchen 21 und ein dickeres Röhrchen 22, so daß es sich bei den beiden Scheiben 13 um identische Formteile handelt. Die ineinandergreifenden Überlaufröhrchen 21, 22 erlauben es, die jeweils innenliegenden Strumpfenden bzw. die Scheiben 13, 13 auf die Lage und die Breite der Luftschicht zwischen den beiden Wandschalen 1, 2 auszurichten. Auf dem Mittelabschnitt 8 des Injektionsrohres 4 sitzt ferner noch eine Tropfscheibe 23, die mit zwei weiteren Durchbrüchen für jeweils ein dickeres Überlaufröhrchen 22 versehen ist.

Die das vordere Ende des Strumpfes 9 tragende frontseitige Scheibe 15 weist eine in das Injektionsrohr 4 eingreifende Innenbuchse 24 auf, an der ein Rückschlagventil 25 angeformt ist.

Die Injektionsmasse wird durch das Rückschlagventil 25 hindurch in das Injektionsrohr 4 eingedrückt und tritt durch die am hinteren Verankerungsbereich 6 vorgesehene radiale Öffnung 26 in den Innenraum des Strumpfes 10. Bei der Füllung des Strumpfes 10 wird Injektionsmasse zugleich durch die Überlaufröhrchen 21, 22 in den Innenraum des vorderen Strumpfes 9 geleitet. Die Injektion wird bis zur vollständigen Aufblähung und Ausfüllung der Strümpfe 9, 10 ausgeführt, wobei eine Füllüberwachung einerseits durch den aufzubringenden Preßdruck und andererseits durch Beobachtung des sich bildenden vorderen Pfropfens durch die aus transparentem Kunststoff gefertigte Front scheibe 15 hindurch erfolgen kann. Nach fertiger Montage sind im Bereich der Verankerungsabschnitte 5, 6 zwei massive Pfropfen ausgebildet, deren Durchmesser $D$ etwa das Fünffache des Durchmessers $d$ des Injektionsrohres 4 beträgt. Der zwischen diesen beiden Pfropfen liegende Mittelbereich 27 des Verankerungsbolzens besteht im wesentlichen nur aus dem verhältnismäßig dünnen Mittelabschnitt 8 des Injektionsrohres 4 und den beiden Überlaufröhrchen 21, 22. In diesem Bereich ist der montierte Injektionsanker ausreichend elastisch biegbar, um thermisch bedingten, seitlichen Relativbewegungen zwischen den Gebäudeschalen 1, 2 zu folgen.

Der Durchmesser der Scheiben 13, 14, 15 ist beim Ausführungsbeispiel etwa fünffach größer als der Durchmesser $d$ des Injektionsrohres 4 und entspricht fast schon dem Durchmesser des Bohrloches 3, so daß die Scheiben zugleich als Positionierhilfe beim ersten Einsetzen des Injektionsankers im Bohrloch dienen.

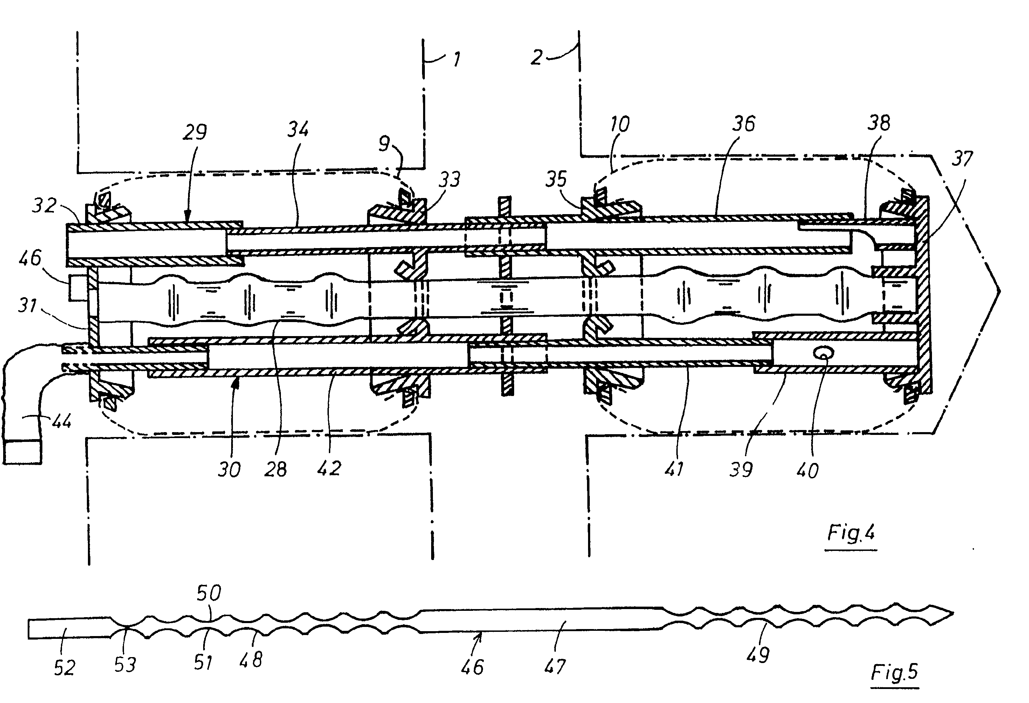

Beim Ausführungsbeispiel nach Fig. 4 ist das zentrale Stahlrohr 28 innerhalb des von dem hinteren Strumpf umschlossenen Pfropfenraumes völlig verschlossen, fehlt also die hintere Öffnung 26 gemäß Ausführungsbeispiel nach Fig. 1. Das zentrale Stahlrohr 28 wirkt hier nur als Stahlanker. Der Injektionsanker ist hier mit zwei gesonderten Injektionsleitungen 29, 30 versehen, von denen die obere 29 aus einem in der vorderen Scheibe 31 sitzenden, vorzugsweise daran angeformten Rohrstück 32 steht, in das ein die Scheibe 32 durchsetzendes Röhrchen 34 eingesteckt ist, auf das wiederum ein die erste hintere Abdeckscheibe 35 durchsetzendes Röhrchen 36 übergeschoben ist. An der endseitigen Scheibe 37 ist ein ausgeschnittenes Rohrstück 38 angeformt, das als Ausrichthilfe in das Röhrchen 36 hineinragt.

Bei der unteren Injektionsleitung 30 handelt es sich bei diesem Ausführungsbeispiel um eine Rückführleitung. Diese besteht aus einem an die zweite hintere Scheibe 37 angeformten Rohrstück 39 mit Öffnung 40, den nachfolgenden, jeweils eine der Scheiben 35, 33 durchsetzenden Rohrstücken 41, 42 und einem an die frontseitige Scheibe 31 angeformten Rohrstück 43, welches auf einem vor dieser Frontscheibe 31 liegenden Endabschnitt einen elastischen Strumpf 44 trägt.

Durch die obere Injektionsleitung 29 wird zunächst Injektionsmasse nur in den hinteren Strumpf 10 injiziert, und nach Aufbau eines gewissen Druckes fließt Injektionsmasse über die untere Injektionsleitung 30 zurück zum Kontrollstrumpf 44, an dessen Aufblähen die Druck- und Füllverhältnisse im hinteren Strumpf 10 abgeschätzt und kontrolliert werden können. Nach dem Aushärten des hinteren Pfropfens wird der Kontrollstrumpf 44 abgetrennt. In einem letzten Arbeitsgang wird durch einen zweiten, an der Frontscheibe 31 vorgesehene Injektionseinlaß 45 hindurch der vordere Pfropfenraum mit Injektionsmasse gefüllt. Das Rohr 28 wird dabei nicht gefüllt, so daß es seine Flexibilität im mittleren Bereich voll beibehält. Statt des Kontrollstrumpfes 44 kann auch ein Rückschlagventil als Sichtkontrolle an der Frontscheibe vorgesehen werden.

Fig. 5 zeigt einen aus einem Stahldraht gefertigten massiven Stahlanker 46 von wenigen Millimetern Durchmesser, der im mittleren Bereich 47 rundbelassen ist und dessen beide im Bereich der auszubildenden Pfropfen liegenden Abschnitte 48, 49 durch sich paarweise gegenüberliegende Eindrückungen 50, 51 an zwei sich gegenüberliegenden Seiten in der Oberfläche gewellt sind. Die Wellung ist hierbei so gewählt, daß die von der Injektionsmasse eingenommenen "Zahnräume" größer und breiter sind als die metallischen "Zähne", so daß ein auszugsfester Verbund zwischen Anker und Injektionsmasse erreicht wird. Ein solcher Drahtanker 46 kann bei dem Ausführungsbeispiel nach Fig. 1 unmittelbar nach Einpressen der Injektionsmasse noch in das zentrale Injektionsrohr 4 eingesteckt werden, so daß er beim Aushärten miteingebunden wird. An seinem vorne herausragenden Ende 52 kann die Zugfestigkeit des eingebrachten Injektionsankers überprüft werden, wonach dann das herausragende Ende 52 an der im Bereich der Frontscheibe 15 dann liegenden Sollbruchstelle 53 abgebrochen wird. Der glattbelassene mittlere Abschnitt 47 des Stahldrahtankers 46 liegt dann im Bereich des Luftspaltes 27. Da ein solcher massiver Drahtanker 46 den wechselnden Biegebelastungen wesentlich besser standhält als ein Rohr, bleibt in einem solchen Falle die Verankerung auch noch dann erhalten, wenn das Rohr 4 einmal im mittleren Bereich brechen sollte.

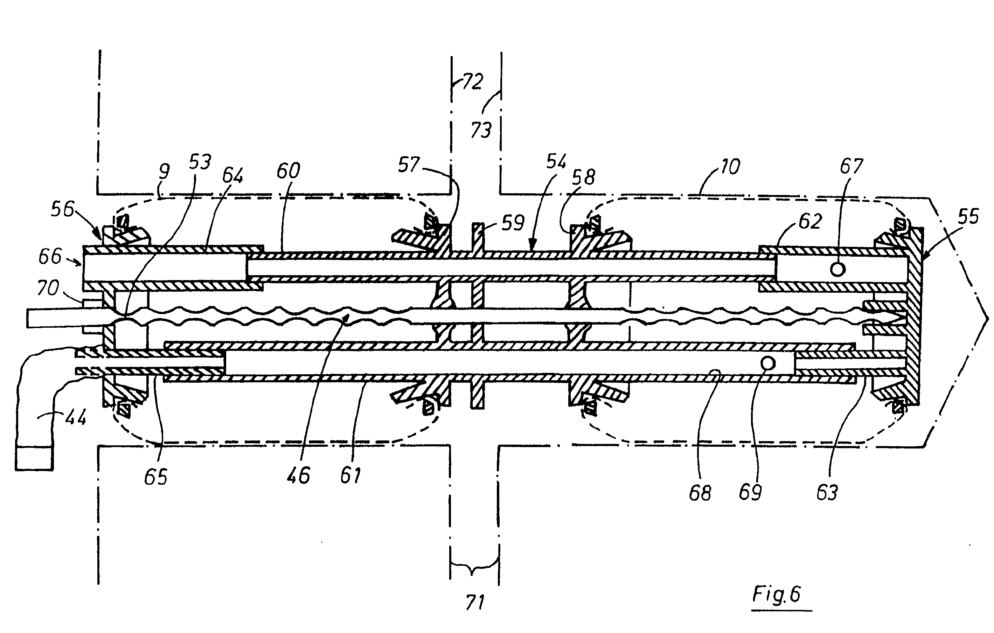

Beim Ausführungsbeispiel nach Fig. 6 besteht der Injektionsanker im wesentlichen aus dem Stahldrahtanker 46, aus einem Zentralteil 54 und aus zwei kappenförmigen Scheiben 55, 56, die jeweils aus Kunststoff bestehen.

Der Zentralteil 54 umfaßt die beiden innenliegenden Scheiben 57, 58 mit der dazwischenliegenden Tropfscheibe 59, die hier einstückig mit zwei durchgehenden Rohren 60, 61 gespritzt sind und die dabei zugleich auf den drahtförmigen Anker 46 aufgespritzt sind. Auf diesem Zentralteil 54 mit Drahtanker 46 werden — zusätzlich zu den Strümpfen 9, 10 — jeweils die hintere Scheibe 55 und die vordere Scheibe 56 mit ihren angeformten Rohrstücken 62, 63, 64, 65 aufgeschoben, wobei hier wieder die obere sich ergebende Injektionsleitung 66 zum Füllen des hinteren Strumpfes 10 über das hintere Austrittsloch 67 dient. In die untere Injektionsleitung 68 tritt durch das Loch 69 Injektionsmasse ein, die zum vorderen Kontrollstrumpf 44 wie beim Ausführunsbeispiel nach Fig. 4 fließt. Zur Füllung des vorderen Strumpfes 9 ist ein weiterer Injektionseinlaß 70 an der vorderen Scheibe 56 vorgesehen.

Bei der Ausführungsform nach Fig. 6 ist durch den starren Abstand zwischen den beiden innenliegenden Scheiben 57, 58 sichergestellt, daß der zentrale Stahlanker 46 über eine vorgegebene Strecke hinweg nicht in Injektionsmasse eingebettet wird, und zwar unabhängig von der Breite des Luftspaltes 71 zwischen den beiden Gebäudeschalen 72, 73, da diese erfahrungsgemäß bei zu sanierenden Bauten oft sehr stark unterschiedlich anfallen. Bei zu schmalem Luftspalt 71 wird tiefer in das hintere Mauerwerk gebohrt, so daß das mittlere Ankerteil ein Stück weit in das hintere Mauerwerk eingesetzt wird. Die lange einbettungsfreie Strecke gewährleistet eine ausreichende Flexibilität gegenüber den Wechselbelastungen und stellt sicher, daß der Drahtanker nicht durch Materialüberdehnung bricht. Die Tropfscheibe 59 ist bei diesem Ausführungsbeispiel außermittig nahe hinter der Scheibe 57 des vorderen Pfropfens angeordnet.

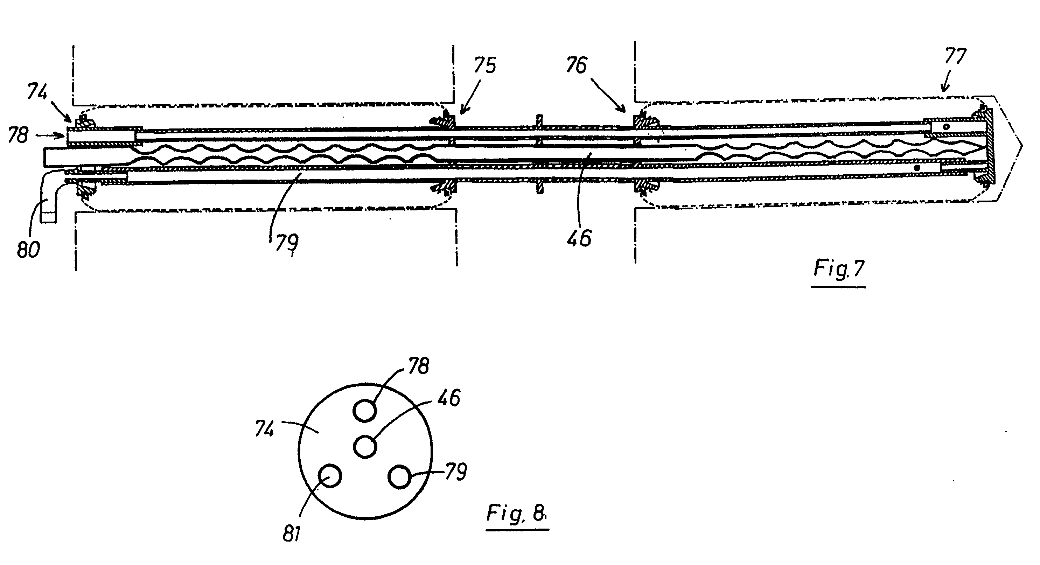

Fig. 7 zeigt eine ähnliche Ausführungsform wie Fig. 6 mit allerdings dem Unterschied, daß hier der Gesamtdurchmesser des Injektionsankers wesentlich geringer als bei den vorangegangenen Ausführungsbeispielen ist. Während der zentrale Stahldrahtanker 46 einen Durchmesser von etwa 3 bis 5 Millimetern aufweisen kann, weisen die Scheiben 74, 75, 76, 77 etwa 4-fachen Durchmesser auf, so daß solche Injektionsanker im allgemeinen in einem Fugenraum eines Gemäuers eingebaut werden können.

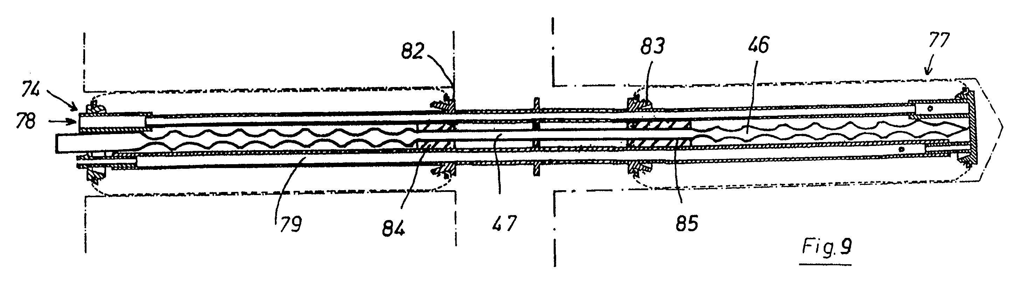

Aus der in Fig. 8 gezeigten Stirnansicht auf die Scheibe 74 ist zu ersehen, daß die Injektionsleitung 78 für die Ausbildung des hinteren Pfropfens, die Rückführleitung 79 zum vorderen Kontrollstrumpf 80 und der zweite Einlaß 81 für den vorderen Pfropfen an den Ecken eines gleichschenkligen Dreieckes äquidistant vom zentralen Drahtanker 46 angeordnet sind.

Beim Ausführungsbeispiel nach Fig. 9 weisen die beiden, den freien Mittelbereich 47 des massiven Stahlankers 46 begrenzenden Scheiben 82, 83 im zentralen Bereich je eine lange, weichelastisch verformbare Buchse 84, 85 zur beweglichen, besser auslenkbaren Einbettung des Stahlankers 46 auf.

Bezugszeichenliste

1 Verblendbauerwerk
2 Wandschale
3 Bohrloch

4 Injektionsrohr
5 Verankerungsabschnitt
6 Verankerungsabschnitt
7 Einrückung
8 Mittelabschnitt
9 Strumpf
10 Strumpf
11 Klemmring
12 Konusring
13 Scheibe
14 Scheibe
15 Scheibe
16 Innenöffnung
17 Innenrand
18 Abfasung
19 Nabenbuchse
20 Dichtlippe
21 Überlaufröhrchen
22 Überlaufröhrchen
23 Tropfscheibe
24 Innenbuchse
25 Rückschlagventil
26 Öffnung
27 Mittelbereich
28 Stahlrohr
29 Leitung
30 Leitung
31 Scheibe
32 Rohrstück
33 Scheibe
34 Röhrchen
35 Abdeckscheibe
36 Röhrchen
37 Scheibe
38 Rohrstück
39 Rohrstück
40 Öffnung
41 Rohrstück
42 Rohrstück
43 Rohrstück
44 Strumpf
45 Einlaß
46 Stahlanker
47 mittlerer Bereich
48 Abschnitt
49 Abschnitt
50 Eindrückung
51 Eindrückung
52 Ende
53 Sollbruchstelle
54 Zentralteil
55 Scheibe
56 Scheibe
57 Scheibe
58 Scheibe
59 Tropfscheibe
60 Rohr
61 Rohr

6

62 Rohrstück
63 Rohrstück
64 Rohrstück
65 Rohrstück
66 Leitung
67 Austrittsloch
68 Leitung
69 Austrittsloch
70 Einlaß
71 Luftspalt
72 Gebäudeschale
73 Gebäudeschale
74 Scheibe
75 Scheibe
76 Scheibe
77 Scheibe
78 Leitung
79 Leitung
80 Strumpf
81 Einlaß
82 Scheibe
83 Scheibe
84 Buchse
85 Buchse

## Patentansprüche

1. In ein vorgebohrtes Loch einer mehrschaligen Gebäudewand einzusetzender Injektionsanker, mit mindestens einem Injektionsrohr (4) und mit einem Stahlanker, der an einem vorderen und an einem hinteren Verankerungsabschnitt (5, 6) gesonderte, zum Abschluß der Bohrlochhälften innerhalb jeder Gebäudeschale (1, 2) dienende Dichtelemente (13, 14 ; 13, 15) aufweist, welche zur Ausbildung von Injektionsmasse-Pfropfen ausgelegt sind, wobei der Injektionsanker auf einem zwischen den Verankerungsabschnitten (5, 6) liegenden Mittelbereich (27) zur Übertragung der zwischen den beiden Gebäudeschalen (1, 2) auftretenden Zugkräfte ausgelegt ist, dadurch gekennzeichnet, daß die Injektionsmasse-Pfropfen derart ausgelegt sind, daß deren Durchmesser (D) mindestens das 2 1/2 -fache des Durchmessers (d) des Stahlankers und deren Abstand voneinander ein Vielfaches des Stahlankerdurchmessers (d) beträgt, und daß der Mittelbereich (27) des Stahlankers in einem solchen Maße elastisch biegbar ist, daß der Injektionsanker thermisch bedingten seitlichen Bewegungen zwischen den beiden Gebäudeschalen (1, 2) folgen kann.

2. Injektionsanker nach Anspruch 1, dadurch gekennzeichnet, daß die Dichtelemente jeweils einen, die auszubildenden Injektionsmasse-Pfropfen umschließenden Strumpf (9, 10) umfassen.

3. Injektionsanker nach Anspruch 1 oder 2, dadurch gekennzeichnet, daß der Stahlanker zugleich das Injektionsrohr (4) bildet, welches einen Durchmesser (d) zwischen 5 bis 15 Millimeter und eine Wandstärke von etwa 1 Millimeter aufweist.

4. Injektionsanker nach den Ansprüchen 1, 2 oder 3, dadurch gekennzeichnet, daß der Stahlanker nur an seinen Verankerungsabschnitten (5, 6) mit Querschnittsverformungen in Form von Eindrückungen (7) versehen und auf dem Mittelabschnitt (8) rund belassen ist.

5. Injektionsanker nach einem der Ansprüche 1 bis 4, dadurch gekennzeichnet, daß als Strumpfbefestigungsmittel (11, 12, 13, 14, 15) jeweils Scheiben (13, 14, 15) mit angeformtem Konusring (12) vorgesehen sind, auf denen jeweils ein umgestülptes Strumpfende mittels eines Klemmringes (11) befestigt ist.

6. Injektionsanker nach Anspruch 5, dadurch gekennzeichnet, daß der zum Strumpf hin sich erweiternde Konusring (12) an seiner Außenkante mit einer Abfasung (18) versehen ist und daß der Klemmring (11) eine konische Innenöffnung (16) besitzt und mit seinem kleineren, scharfkantigen Innenrand (17) dem dickeren Ende des Konusringes (12) zugewandt ist.

7. Injektionsanker nach den Ansprüchen 5 oder 6, dadurch gekennzeichnet, daß zumindest die dem Mittelabschnitt (8) des Stahlankers benachbarten Scheiben (13, 13) eine zum jeweiligen Strumpfraum hin gerichtete Nabenbuchse (19) mit angeformter, elastischer Dichtlippe (20) aufweisen.

8. Injektionsanker nach einem oder mehreren der Ansprüche 5 bis 7, dadurch gekennzeichnet, daß die dem Mittelabschnitt (8) benachbarten Scheiben (13, 13) zwei teleskopartig ineinandergreifende Überlaufröhrchen (21, 22) zur Verbindung der beiden Strumpfräume aufweisen und daß diese Scheiben (13, 13) identisch ausgebildet und zur Anpassung an die Lage und die Abmessung der Luftschicht der Gebäudewand auf dem Stahlanker bei angeklemmten Strümpfen (9, 10) verschiebbar sind.

9. Injektionsanker nach einem der Ansprüche 5 bis 8, dadurch gekennzeichnet, daß der Durchmesser der Scheiben (13, 14, 15) etwa 5-fach größer als der Durchmesser des Stahlankers ist.

10. Injektionsanker nach einem der Ansprüche 1 bis 9, gekennzeichnet durch eine auf dem Mittelabschnitt (8) des Stahlankers (4) angeordnete Tropfscheibe (23), die mit zwei weiteren Durchbrüchen für die Überlaufröhrchen (21, 22) versehen ist.

11. Injektionsanker nach Anspruch 3, dadurch gekennzeichnet, daß die frontseitige Scheibe (15) eine in das Injektionsrohr (4) eingreifende Innenbuchse (24) aufweist, an der ein Rückschlagventil (25) angeformt ist, und daß die frontseitige Scheibe (15) aus transparentem Kunststoff besteht.

12. Injektionsanker nach Anspruch 1, dadurch gekennzeichnet, daß er mit zwei Injektionsleitungen (29, 30) versehen ist, von denen eine (29) im Bereich des hinteren Strumpfes (10) und die andere (30) im Bereich des vorderen Strumpfes (9) mündet, so daß zunächst nur der hintere Pfropfen ausbildbar und nach Aushärten auf seine Zugfestigkeit prüfbar ist, ehe der vordere Pfropfen ausgebildet wird.

13. Injektionsanker nach Anspruch 12, gekennzeichnet durch eine nur zum Innenraum des hinteren Strumpfes (10) offene Rückflußleitung (30), die an ihrem vorderen, vor der vorderen Abdeckscheibe (31) des vorderen Strumpfes (9) liegenden Ende ein Rückschlagventil oder einen Auffangstrumpf (44) zur Sichtkontrolle für die Ausbildung des hinteren Pfropfens trägt.

14. Injektionsanker nach einem der Ansprüche 1 bis 13, dadurch gekennzeichnet, daß der Stahlanker (46) aus einem massiven Drahtstück besteht, das an seinen einzubettenden Abschnitten (48, 49) mit beidseitigen Eindrückungen (50, 51) versehen und im Mittelabschnitt (47) rund belassen ist.

15. Injektionsanker nach Anspruch 14, dadurch gekennzeichnet, daß der massive Stahlanker (46) einen Durchmesser von etwa 3 bis 5 Millimetern aufweist und daß sein freier Mittelbereich (47) eine durch einen festen Abstand zwischen den beiden inneren Scheiben (57, 58) gesicherte Mindestlänge aufweist.

16. Injektionsanker nach Anspruch 15, dadurch gekennzeichnet, daß die beiden den freien Mittelbereich (47) des massiven Stahlankers (46) begrenzenden Scheiben (57, 58) auf den Stahlanker (46) aufgespritzt sind.

17. Injektionsanker nach Anspruch 16, dadurch gekennzeichnet, daß die beiden Scheiben (57, 58) und die Tropfscheibe (59) einstückig mit zwei die beiden Scheiben (57, 58) durchsetzenden Rohren (60, 61) gespritzt sind.

18. Injektionsanker nach einem der Ansprüche 12 bis 17, dadurch gekennzeichnet, daß der massive Stahlanker (46) ein Stück weit über die vordere Scheibe (56) vorsteht und im Bereich der vorderen Scheibe eine Sollbruchstelle (53) aufweist.

19. Injektionsanker nach einem oder mehreren der Ansprüche 14 bis 18, dadurch gekennzeichnet, daß die beiden den freien Mittelbereich (47) des massiven Stahlankers (46) begrenzenden Scheiben (82, 83) im zentralen Bereich lange weichelastisch verformbare Buchsen (84, 85) für eine bewegliche Lagerung des Stahlankers (46) aufweisen.

## Claims

1. Injection anchor to be set in a pre-drilled hole of a multi-shelled building wall with at least one injection tube (4) and with a steel anchor having at a front and at a rear anchoring section (5, 6) separate sealing elements (13, 14 ; 13, 15) for closing off the halves of the drill hole within each building shell (1, 2), the sealing elements being designed for the creation of injection mass plugs, the injection anchor being set in a central area (27) situated between the anchoring sections (5, 6) for the transmission of traction forces between the two building shells (1, 2), characterised in that the injection mass plugs are designed in such a manner that their diameter (D) measures at least 2 1/2 times the diameter (d) of the steel anchor and their distance from each other is a multiple of the diameter (d) of the steel anchor, and in that the central area (27) of the steel anchor has elastic flexibility to such an extent that the injection anchor can follow lateral movements between both building shells (1, 2) caused by temperature differences.

2. Injection anchor as in Claim 1, characterised in that the sealing elements each comprise a stocking (9, 10) surrounding the injection mass plug to be formed.

3. Injection anchor as in Claims 1 or 2, characterised in that the steel anchor at the same time forms the injection tube (4), which has a diameter (d) of between 5 and 15 millimetres and a wall thickness of approximately 1 millimetre.

4. Injection anchor as in Claims 1, 2 or 3, characterised in that the steel anchor is equipped, but only in its

8

anchoring sections (5, 6), with deformations in its diameter in the form of indents (7) and is left round in its central section (8).

5. Injection anchor as in one of Claims 1 to 4, characterised in that discs (13, 14, 15) with a moulded cone ring (12) are provided as fixing devices (11, 12, 13, 14, 15) for the stocking, on each of which a turned-over stocking end is attached by means of a clamping ring (11).

6. Injection anchor as in Claim 5, characterised in that the cone ring (12) extending in the direction of the stocking is equipped at its outer edge with a bevel (18) and in that the clamping ring (11) has a cone-shaped inner opening (16) and faces the thicker end of the cone ring (12) with its smaller sharp-edged inner rim (17).

7. Injection anchor as in Claims 5 or 6, characterised in that at least the discs (13, 13) positioned next to the central section (8) of the steel anchor have a hub casing (19) aligned towards each stocking space and have a moulded elastic sealing lip (20).

8. Injection anchor as in one or more of Claims 5 to 7, characterised in that the discs (13, 13) lying next to the central section (8) have two telescopically interlocking overflow pipes (21, 22) connecting the two stocking areas, and that these discs (13, 13) are identical and can be moved on the steel anchor to adjust to the position and dimensions of the layer of air between the walls when the stockings (9, 10) are fastened.

9. Injection anchor as in one of Claims 5 to 8, characterised in that the diameter of the discs (13, 14, 15) is approximately five times that of the the steel anchor.

10. Injection anchor as in one of Claims 1 to 9, characterised by a drip disc (23) positioned on the central section (8) of the steel anchor (4), with two further openings for the overflow pipes (21, 22).

11. Injection anchor as in Claim 3, characterised in that the front disc (15) has an inner casing (24) engaging the injection tube (4), to which a check valve (25) is joined, and in that the front disc (15) is made of transparent plastic.

12. Injection anchor as in Claim 1, characterised in that it is equipped with two injection pipes (29, 30), one (29) leading into the area of the rear stocking (10) and the other (30) leading into the area of the front stocking (9), so that it is possible to form only the rear plug initially and after it has hardened to test it for tensile strength before the front plug is formed.

13. Injection anchor as in claim 12, characterised by a back-flow duct (30) which is open only towards the interior of the rear stocking (10), and which carries at its front end, lying in front of the front covering disc (31) of the front stocking (9) a check valve or a reception stocking (44) for visual inspection of the formation of the rear plug.

14. Injection anchor as in one of Claims 1 to 13, characterised in that the steel anchor (46) consists of a solid piece of wire, equipped with bilateral indents (50, 51) on the sections which are to be embedded (48, 49) and left round in its central section (47).

15. Injection anchor as in Claim 14, characterized in that the solid steel anchor (46) has a diameter of approximately 3 to 5 millimetres, and that its free central area (47) has a minimal length ensured by a fixed distance between both inner discs (57, 58).

16. Injection anchor as in Claim 15, characterised in that the two discs (57, 58) defining the free central area (47) of the solid steel anchor (46) are fixed by extrusion onto the steel anchor (46).

17. Injection anchor as in Claim 16, characterised in that both discs (57, 58) and the drip disc (59) are extruded in one piece with two tubes (60, 61) penetrating the two discs (57, 58).

18. Injection anchor as in one of Claims 12 to 17, characterised in that the solid steel anchor (46) protrudes to a certain degree beyond the front disc (56) and has in the area of the front discs a nominal breaking point (53).

19. Injection anchor as in one or more of Claims 14 to 18, characterised in that the two discs (82, 83) defining the free central area (47) of the solid steel anchor (46) have in the central area long, soft elastically malleable casings (84, 85) for movable positioning of the steel anchor (46).

## Revendications

1. Ancrage d'injection à insérer dans un trou préperce d'une paroi de bâtiment à plusieurs coffrages, avec au moins un tube d'injection (4) et un ancrage en acier, qui présente, en une section d'ancrage avant et une section d'ancrage arrière (5, 6), des éléments d'étanchéité (13, 14 ; 13, 15) séparés servant à délimiter les demi-trous percés à l'intérieur de chaque coffrage de bâtiment (1, 2), qui sont disposés pour réaliser des tampons de masse d'injection, l'ancrage d'injection étant disposé sur une zone centrale (27), située entre les sections d'ancrage (5, 6) pour transmettre les efforts de traction survenant entre les deux coffrages de bâtiment (1, 2), caractérisé par le fait que les tampons de masse d'injection sont agencés pour que leur diamètre (D) soit au moins égal à 2,5 fois le diamètre (d) de l'ancrage en acier et que leur espacement mutuel soit un multiple du diamètre (d) de l'ancrage en acier et que la zone centrale (27) de l'ancrage en acier est pliable élastiquement, dans des proportions telles, que l'ancrage d'injection peut suivre des déplacements latéraux, d'origine thermique, se produisant entre les deux coffrages de bâtiment (1, 2).

2. Ancrage d'injection selon la revendication 1, caractérisé par le fait que les éléments d'étanchéité comprennent chacun un manchon (9, 10) entourant les bouchons de masse d'injection à réaliser.

3. Ancrage d'injection selon la revendication 1 ou 2, caractérisé par le fait que l'ancrage en acier forme en même temps le tube d'injection (4), qui présente un diamètre (d) compris entre 5 et 15 millimètres et une épaisseur de paroi d'à peu près 1 millimètre.

4. Ancrage d'injection selon la revendication 1, 2 ou 3, caractérisé par le fait que l'ancrage en acier n'est pourvu que sur ses sections d'ancrage (5, 6) de déformations de section transversale, ayant la forme d'empreintes (7), et comporte une section médiane (8) lamée ronde.

5. Ancrage d'injection selon l'une des revendications 1 à 4, caractérisé par le fait que des disques (13, 14, 15), sur lesquels est formé un anneau conique (12), sont prévus comme moyen de fixation de manchon (11, 12, 13, 14, 15) sur lesquels une extrémité de manchon évasée est fixée à l'aide d'une bague de serrage (11).

6. Ancrage d'injection selon la revendication 5, caractérisé par le fait que l'anneau conique (12), s'agrandissant vers le manchon, est pourvu sur son arête extérieure d'un chanfrein (18) et la bague de serrage (11) comporte une ouverture intérieure conique (16) et est tournée, avec sa plus petite bordure intérieure (17), à arête vive, vers l'extrémité plus épaisse de la bague conique (12).

7. Ancrage d'injection selon les revendications 5 ou 6, caractérisé par le fait qu'au moins les disques (13, 13), voisins de la section médiane (8) de l'ancrage en acier, comportent une douille de moyeu (19), orientée vers l'espace de manchon correspondant et pourvue d'une lèvre d'étanchéité (20) élastique.

8. Ancrage d'injection selon une ou plusieurs des revendications 5 à 7, caractérisé par le fait que les disques (13, 13) voisins de la section médiane (8) présentent deux petits tubes de déversement (21, 22) s'engageant l'un dans l'autre de façon télescopique, pour assurer la liaison des deux espaces de manchon, et que ces disques (13, 13) sont de réalisation identique et déplaçables sur l'ancrage en acier, lorsque les manchons (9, 10) sont serrés, pour s'adapter à la position et aux dimensions de la couche d'air de la paroi de bâtiment.

9. Ancrage d'injection selon l'une des revendications 5 à 8, caractérisé par le fait que le diamètre des disques (13, 14, 15) est à peu près le quintuple du diamètre de l'ancrage en acier.

10. Ancrage d'injection selon l'une des revendications 1 à 9, caractérisé par un disque de bouchon (23), disposé sur la section médiane (8) de l'ancrage en acier (4) et pourvu de deux autres passages pour les petits tubes de déversement (21, 22).

11. Ancrage d'injection selon la revendication 3, caractérisé par le fait que le disque avant (15) présente une douille intérieure (24) s'engageant dans le tube d'injection (4), sur laquelle est formé un clapet anti-retour (25), et le disque avant (15) est en matière synthétique transparente.

12. Ancrage d'injection selon la revendication 1, caractérisé par le fait qu'il est pourvu de deux conduites d'injection (29, 30), dont l'une (29) débouche dans la zone du manchon arrière (10) et l'autre (30) dans la zone du manchon avant (9), de sorte que d'abord seul le bouchon arrière est réalisable et contrôlable après durcissement, quant à sa résistance, avant que ne soit réalisé le bouchon avant.

13. Ancrage d'injection selon la revendication 12, caractérisé par une conduite de retour (30), ouverte seulement vers l'espace intérieur du manchon arrière (10), qui porte à son extrémité avant, située devant le disque de recouvrement avant (31) du bouchon avant (9), un clapet anti-retour ou un manchon collecteur (44), en vue d'un contrôle visuel de la réalisation du bouchon arrière.

14. Ancrage d'injection selon l'une des revendications 1 à 13, caractérisé par le fait que l'ancrage en acier (46) est constitué d'une pièce de fil massive, qui est pourvue dans ses sections à encastrer (48, 49) d'empreintes (50, 51) situées des deux côtés et dont la section médiane (47) est laissée ronde.

15. Ancrage d'injection selon la revendication 14, caractérisé par le fait que l'ancrage en acier massif (46) présente un diamètre d'à peu près 3 à 5 millimètres et sa zone médiane libre (47) présente une longueur minimale, assurée grâce à un espacement fixe entre les deux disques intérieurs (57, 58).

16. Ancrage d'injection selon la revendication 15, caractérisé par le fait que les deux disques (57, 58) qui délimitent la zone médiane libre (47) de l'ancrage en acier massif (46) sont réalisés par injection sur l'ancrage en acier (46).

17. Ancrage d'injection selon la revendication 16, caractérisé par le fait que les deux disques (57, 58) et le disque de bouchon (59) sont injectés d'un seul tenant avec deux tubes (60, 61) qui traversent les deux disques (57, 58).

18. Ancrage d'injection selon l'une des revendications 12 à 17, caractérisé par le fait que l'ancrage en acier massif (46) fait un peu saillie hors du disque avant (56) et présente une zone de rupture (53) dans la zone du disque avant.

19. Ancrage d'injection selon une ou plusieurs des revendications 14 à 18, caractérisé par le fait que, dans la zone centrale, les deux disques (82, 83) qui délimitent la zone médiane libre (47) de l'ancrage en acier massif (46) présentent des douilles longues (84, 85) déformables par légère élasticité, pour obtenir un montage mobile de l'ancrage en acier (46).

*Fig.1*

Fig. 2

Fig. 3

EP 0 330 114 B1

EP 0 330 114 B1

Fig.4

Fig.5

Fig.6

Fig.7

Fig. 8.

Fig. 9